# EUROPEAN PATENT APPLICATION

(11) **EP 1 172 155 A2**
(43) Date of publication of application: **16.01.2002**
(21) Application number: 01304264.3
(22) Date of filing: 14.05.2001
(51) Int. Cl.: B08B 9/055, F16L 55/26, G01M 3/00

(54) **Pipeline pig**

(30) Priority: 17.05.2000 GB 0011933
(71) Applicant: Hydro Kleen Systems Ltd., Chester CH4 0BX (GB)
(72) Inventor: Phipps, John, Hydro Kleen Systems Ltd., Chester CH4 0BX (GB)
(74) Representative: Jones, David Colin

(57) **Abstract**

A pipeline pig (26) for inspecting the internal condition of a pipeline, especially for determining the wall thickness therealong, comprises three discrete modules (27,28,29) containing electronics distributed therebetween. The modules (27,28,29) are individually protected by polyurethane outer coverings (30,31) and are interconnected by electrical cables. A flexible arrangement results for use in narrow and tortuous pipelines. The pig (26) carries its own power supply so that results from its ultrasonic scanning system can be processed and stored on board for subsequent downloading.

## Description

This invention relates to a pipeline pig.

It is known to send a pig through a pipeline for the purpose of clearing any blockage therein and for removing unwanted deposits that have formed on the inner wall thereof. Such a device finds application, for example, in the oil industry, especially for cleaning fired heater or furnace tubes in a refinery. Refinery fired heaters may be subjected to temperatures normally in excess of 400°C, and in specialist furnaces temperatures can exceed 1350°C. Such conditions lead to the formation of carbonaceous deposits (coke) on the pipeline wall, and a pig is forced therethrough under pressure of a fluid, for example water, such that the deposits are removed by friction as the pig scrapes along the pipeline wall. US-A-5 924 158 discloses an exemplary pig suitable for this purpose. The pig may be passed through the pipeline, un-directionally or bi-directionally, several times to remove the coke. Decoking is carried out after the furnace has been taken out of service and cooled down.

However, the extreme conditions referred to above, usually exacerbated by the highly pressurised flow of crude and semi-refined feedstock (oil) through the pipeline, can impose high levels of stress on the pipeline, which can contain various grades of chromed steel.

High temperature refining activity within the furnace leads to separation of crude oil into its component parts, which can lead to corrosion of the tube wall. Decoking carried out by steam or air can also lead to a thinning of the tube wall.

Accordingly, regular monitoring of the condition of the pipeline is required, to ensure that decoking has been fully effective, and to ensure that the wall thickness has not been unduly reduced. Furthermore, in subsea pipelines, tides can remove the sea bed from part of the line leaving it without support and subjecting it to undue mechanical stress. If a pipeline is allowed to deteriorate beyond safe limits, this can lead, in extreme cases, to a fracture, with the associated expensive and disruptive unscheduled downtime. Abrupt stoppages can also lead to blockage of the pipeline as the process materials carried thereby cool and tend to solidify.

Monitoring of the condition of a pipeline is conventionally carried out by radiography, precision monitoring of flow and pressure, or by thermal imaging. However, each of these techniques has disadvantages. Radiography can be time consuming, for example taking 6 or 7 days fully to radiograph an entire furnace, and requires the furnace tube to be abrasively scored on the outer wall to carry out the radiograph sample successfully. Furthermore, a furnace would normally need to be fully scaffolded internally to enable this work to be carried out, this being disadvantageous in time and cost and also omission open to misinterpretation. Thermal imaging usually looks for hotspots as an indication of contamination. Monitoring is carried out whilst the furnace is in operation, and some areas of tube may not be visible from the access windows. Furthermore, the far side of tubes cannot be monitored by this technique.

It is also known to provide a tethered pig with monitoring equipment and to send it through a pipeline, in which operation of the equipment is controlled from outside the pipeline via an umbilical cable, a fibre-optic cable for example, and in which the responses detected by the on-board monitoring equipment are transmitted back along the cable to the external monitoring unit. However, such a monitoring pig is bulky, is not able to be used in pipelines of less than about 6 inches (15 cms) diameter, and is unable to navigate through small radius bends.

It is an object of the present invention to provide a pipeline pig for, and a method of, monitoring a pipeline in a convenient manner.

The present invention thus provides a pipeline pig, which is self-contained, and which is small enough to pass through small bore pipelines, especially fired furnace tube systems.

Thus, in one aspect of the present invention there is provided a pipeline pig for monitoring a pipeline from the interior thereof, the pig comprising an electronics module arrangement, which may be enclosed within an outer casing, wherein the electronics module arrangement comprises a transmitter for transmitting monitoring signals to the wall of the pipeline, a receiver arrangement for receiving transmitted signals returned from the wall of the pipeline, a microprocessor for analysing the received signals, a data logger for storing the data analysed by the microprocessor, and a source of electrical power for supplying the transmitter, receiving arrangement, microprocessor and data logger.

It is understood that whilst the pig of the present invention finds particular application in the monitoring of the tube system of a fired furnace, e.g. a coil, pass or loop that usually shuttles backwards and forwards within the box of the furnace, it is also applicable to straight or meandering long lengths of pipe. The term ' pipeline ' is to be understood as encompassing all such applications of the pig of the invention.

Thus, the pig of the present invention is not dependent on a power supply that is external to the pipeline, and is able to analyse and store onboard the results of the monitoring for subsequent downloading when the pig has exited the pipeline.

By selecting suitably miniaturised components for the electronics module arrangement, the pig can be produced down to a size to allow it to pass through tubes with, for example, a diameter down to 85 mm. Since there is no tethering required for the pig, it can conveniently be sent through convoluted pipeline configurations from end-to-end, without the risk of snagging.

It is envisaged that the pipeline pig will be driven through the pipeline by fluid pressure, for example by water being forced therethrough.

The receiver arrangement may comprise an analogue receiver for receiving the returned signals and an associated digital receiver arranged to convert the analogue signals into digital form and to send the digital signals to the microprocessor. Thus, the digital receiver may conveniently comprise an analogue-to-digital converter. The power source preferably comprises a battery, and the electronics module arrangement advantageously comprises a charging circuit for the battery. For example, the battery may provide up to 2 hours operating time within the pipeline, and the module arrangement may be provided with a fast re-charger for maximum efficiency of usage of the pig.

Preferably the pipeline pig has an outer casing that is flexible, and may advantageously be made of a plastics material, for example polyurethane. The flexibility of the casing allows the pig to negotiate bends within the pipeline.

Advantageously the electronics module arrangement may comprise several modules that are interconnected by electric cables, the modules, or each module being enclosed within an outer casing, or coating, which provides impact and mechanical handling protection. Since the diameter of the cable will usually be less than that of each of the modules, a degree of articulation can be provided for the pig, further to enhance its ability to negotiate sharp bends in the pipeline.

In one embodiment, particularly applicable for larger size, especially diameter, pigs, the casing comprises a single piece that contains the electronics modules. In another, preferred, embodiment, the electronics modules may be enclosed within separate casings.

The preferred configuration of the pipeline pig of the invention comprises three modules, each contained within a respective protective casing and connected to each other by a cable, or hose. Flexibility of the device is thus enhanced. Advantageously, a scanner of the electronics arrangement is provided as one of the discrete modules, preferably as the third, trailing module.

Advantageously, the electronics module is protected by peripheral flanges, for example circumferentially-extending discs, which may be integral with the outer casing. The discs also help to keep the arrangement centred within the pipeline.

The casing or flanges are preferably selected so as to form a sliding fit within the pipeline, to assist in the driving of the pig through the pipeline under pressure of water. Thus, flanges of different dimension, for example diameter, may be fitted to the core of the pipe independence on the size of the bore of the pipeline.

The casing and/or flanges may be made of polyurethane. A single moulding of these components can be slid over the stainless steel body of the or each module, and can be locked into place with threaded and grooved metal rings.

The components of the electronics module arrangement are advantageously sealed units, for protection against the environment, for example the water that is used to push the pig through the pipeline, wall contaminants, or oil product residue within an oil tube.

Advantageously the electronics module arrangement is sealed into an outer casing, this being especially useful when the driving fluid is a liquid.

Advantageously the signals transmitted by the transmitter are acoustic, preferably ultrasonic, signals. It is also envisaged, however, that a laser or radio transmitter may be used.

The analysis of the returned signals can be arranged to discriminate between a steel wall (of the pipeline), carbon deposits (coke) and carbonaceous scales (on the inner wall of the pipeline). The electronics module arrangement can also be arranged to provide an estimate of the thickness of the pipeline wall, thus producing early indication of wear therein.

In accordance with a further aspect of the present invention, there is provided a method of monitoring a pipeline, wherein a pipeline pig comprising an electronics module arrangement, preferably enclosed within an outer casing, is driven along the interior of the pipeline by fluid pressure, wherein the pig transmits monitoring signals to the wall of the pipeline, receives signals returned from the wall, analyses the returned signals and stores therewithin data relating to the condition of the wall of the pipeline, the electronics module arrangement being supplied with electrical power from a source within the pig.

Advantageously, a pipeline pig in accordance with said one aspect of the present invention is used in the monitoring method of the further aspect.

Thus, the unharnessed, flexible pipeline pig of the present invention, with its self-contained onboard electronics can conveniently be sent through small bore and convoluted pipelines, and the information gathered thereby can subsequently be downloaded and reviewed by the operator after the pig has exited the pipeline. The monitoring may be carried out subsequent to a de-coking operation to determine its effectiveness, and/or may be carried out at other times, for example on a regular basis, so that a process engineer can establish a clear understanding of developing patterns of characteristics of the pipeline. In this way erosion of the pipeline can be noted before it occurs to a damaging extent and preventative maintenance can be planned into the normal operation of the pipeline, thereby avoiding undesirable downtime, and enhancing the cost effective management of the refining process, for example.

Monitoring of a pipeline in accordance with the present invention can be completed in as little as 30 minutes.

Pipeline pigs and a method of monitoring a pipeline, will now be described by of example, with reference to the accompanying drawings, in which:
Figure 1 is a schematic drawing of a front section of a first embodiment of the pipeline pig;
Figure 2 is a schematic drawing of a rear section of the pipeline pig of Figure 1;
Figure 3 is a schematic section of the assembled pipeline pig of Figures 1 and 2 within an outer casing;
Figure 4 is a schematic drawing of the preferred embodiment of an articulated three-module pipeline pig of the invention; and
Figures 5 and 6 are schematic sections through two further embodiments of pipeline pigs of articulated configuration.

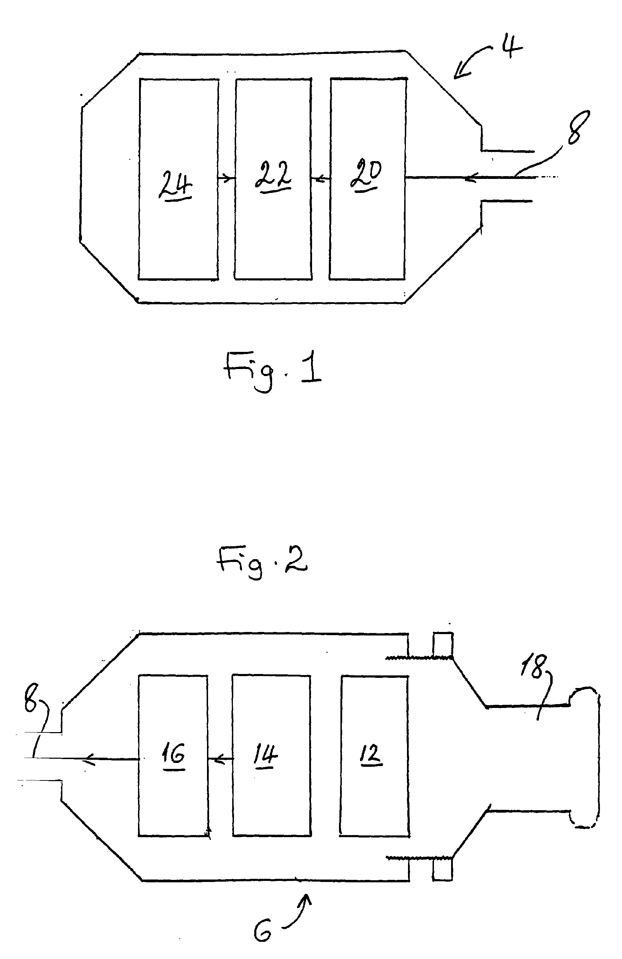

Referring to Figures 1 to 3 of the drawings, a pipeline pig 2 for monitoring a pipeline in the form of a tube system of an oil refining fired furnace, comprises a sealed generally cylindrical stainless steel front module 4, a sealed generally cylindrical stainless steel rear module 6, a flexible cable 8 interconnecting the modules 4 and 6, and an enclosing outer casing 10.

Referring specifically to Figure 2, the rear module 6 comprises a stainless steel container that houses a miniaturised ultrasonic transmitter 12, a miniaturised analogue receiver 14, and a miniaturised digital receiver 16. The rearward end of the module 6 is closed by scanner18 enclosed within a screw-threaded cap, which operates under control of the transmitter 12.

The positioning of the transmitter 12 and scanner 18 at the rear of the pig ensures that it is ready to be primed. The transmitter 12 is an 8 channel transmitter that is arranged to send ultrasound signals to the tube wall (not shown). The (nominal) 8 channel acoustic analogue receiver 14 will receive transmitted signals that have been returned, usually reflected, by the inner wall of the tube , allowing identification of the material content on the tube wall, and also providing an indication of the thickness of the wall by reference to known data of the wall thickness. The scanner 18 can be arranged to send out a signal every 100 ms over a programmable length of pipeline, for example 100 mm, with the transmission being repeated after a programmable period, for example every 300 mm. The speed of send and receive of signals is set in accordance with the speed of travel of the pipeline pig, say between 1 and 5 metres per second. The digital receiver 16 receives the output from the analogue receiver 14, processes the information into digital form and sends its output signals via the cable 8 to the front module 4 of the pig 2.

Referring to Figure 1, the front module 4 comprises a container that houses a miniaturised microprocessor 20, a miniaturised data logger 22 and a miniaturised battery pack and charging circuit 24.

The digitised signals received by the receiver 16 and sent along the cable 8 are received by the microprocessor 20 which analyses them. The microprocessor 20 also performs the overall controlling function for the operation of the pig 2, including controlling the transmitter 12, the receivers 14 and 16 and the data logger 22.

The microprocessor 20 performs an initial analysis to verify the acceptability of the returned signals, rejecting those regarded as being in error. The accepted signals are averaged and a "picture" of the inner wall of the pipeline is produced with the data being passed to the logger 22 for storage. For example, the pig 2 may be travelling through the pipeline at 3m per second and eight transmissions from each of eight transducers located around the outer circumference of the scanner 18 may be directed over a length of 100 mm of the pipe wall. Thus, sixty four 'shots' are fired and received, and the data therefrom will be analysed and stored before the next 64 samples are taken, less than 300 mm further along the pipeline.

It will be appreciated, however, that each of the eight transducers of the arrangement may be programmed to suit the requirements of a particular tube inspection. Signals can be emitted at different rates, say from 1 per second up to 15 per second, thus giving a maximum emission rate of 8 x 15 = 120 'shots' per second. At a traversing pig speed of 1.5m per second, one complete 360° picture from the eight transducers will then be produced for each 100 mm of travel along the pipeline.

The analysis carried out by the microprocessor 20 results in the production of data that identifies the surface material of the inner wall of the tube system , whether it is clean steel, a carbon deposit (coke), or carbonceous scaling. The results also provide an evaluation of the thickness of the wall of the pipeline, thus being indicative of the extent of wear. The data produced by the analysis in the microprocessor 20 is then supplied to the data logger 22 where it is stored. The software within the microprocessor 20 can also arrange for the analysed results to be identified by a time, and thus position, reference to the pig 2 in its journey through the pipeline The final component of the electronics control arrangement is the miniaturised battery pack and charging circuit 24, which ensures a sufficient and steady supply of electrical power to the components 12, 14, 16, 20 and 22. A multi purpose "junction box" style surface unit is provided at the external control location to supply regulated power to recharge the batteries and to provide an interface to the computer to read and display the information collected by the pig 2 subsequent to its retrieval from the pipeline.

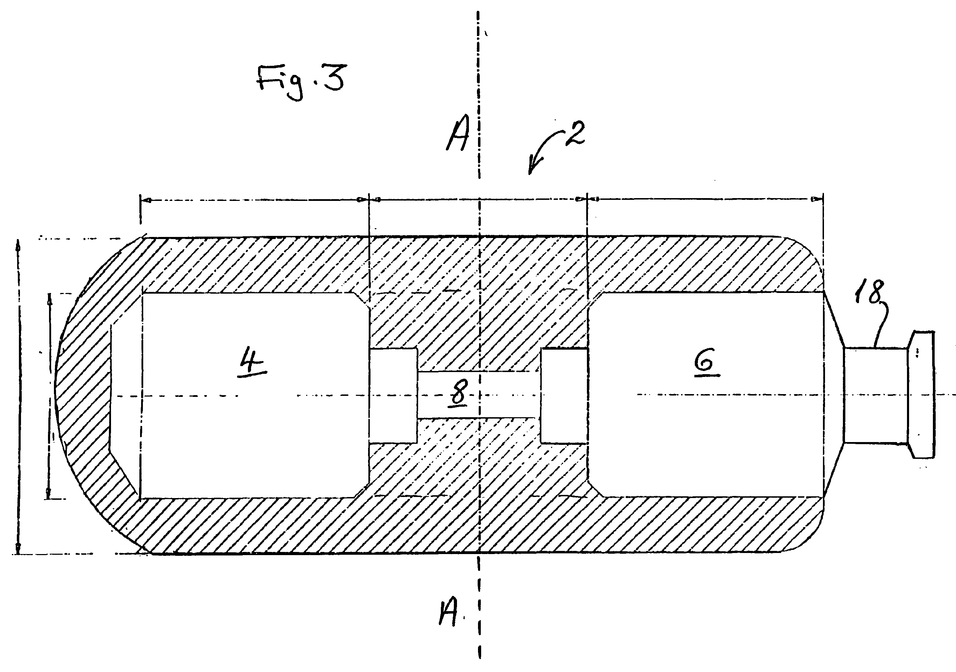

It would thus be appreciated that the pig 2 in carrying its own electrical power source, exemplified by the battery 24, and a means for storing the data received thereby , as exemplified of the data logger 22, is self contained in that it needs no external cable, for example, to supply electrical power thereto for it to operate, or for retrieving the data that is gathered thereby. As can be seen from Figure 3, the stainless steel electronics modules 4 and 6 and the interconnecting cable 8 are enclosed within the outer casing 10 which not only provides mechanical, impact protection for the electronics module arrangement but also provides for sealing of the pig to the tube wall, which is important when the pig 2 is urged along the tube system by water pressure. Advantageously the material of the casing 10 such as to allow the pig to flex, thereby facilitating navigation along a pipeline, which may form a tortuous path. In the latter respect the physical arrangement shown in Figure 3 in which the electronics modules 4 and 6 are interconnected by a relatively smaller and advantageously flexible, cable 8, will provide for some articulation of the pig 2, thereby assisting in its ability to bend and to navigate sharp curves in a pipeline.

The interconnecting cable arrangement advantageously comprises a communications cable disposed within a flexible sheath, which is preferably armoured to provide the required strength. This may be exemplified by a hydraulic hose or compressed air.

As discussed so far, it is envisaged that the casing 10 will be of integral form enclosing an electronics module arrangement that comprises the integral structure of the two modules 4 and 6 and the cable, or other interconnecting means, 8. However, as an alternative the entire pipeline pig may be provided in two parts, each part containing an electronics module enclosing only some of the components and a cable or compressed air hose extending therefrom terminating in a connector, each part being enclosed within an outer casing part. Schematically, this may be envisaged, for example, by having the pig 2 of Figure 3 formed in two parts, either side of the line A-A.

As a further option, the electronic components of the pig exemplified by the components 12, 14 16, 20, 22 and 24, may be located in two cup-like containers which are seam-welded together to form a single cylindrical stainless steel container therearound, the single container then being enclosed within an outer casing. This configuration results in a shorter overall length of the pipeline pig.

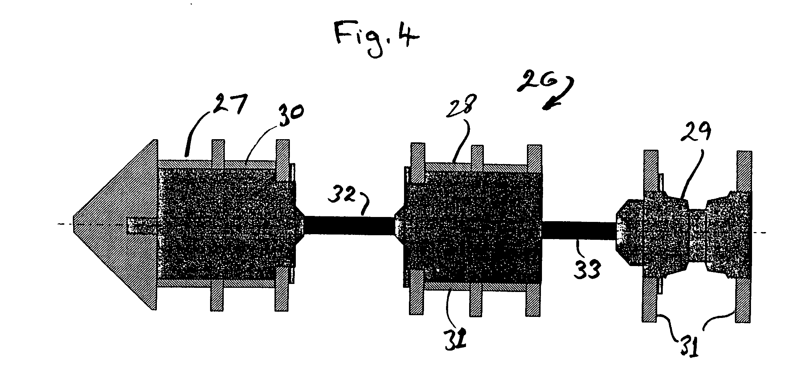

Referring to Figure 4, it is seen that a preferred construction of a pipeline pig 26 comprises three modules 27, 28 and 29. The leading module 27 operationally corresponds to the front module 4 of the previous embodiment, the middle module 28 corresponds operationally to that part of the rear module 6 of the previous embodiment excluding the scanner 18, and the trailing module 29 encompasses the now-separate scanner device of the pig 26. The modules 27 and 28 are substantially entirely circumferentially protected by ribbed polyurethane outer coverings 30, 31 respectively, and the scanner module 29 is fitted with a pair of protective discs 34. The covering 30 of the leading module 27 is conically-shaped at the front to facilitate movement of the device within a pipeline. Cables 32 , 33 provide articulated connection between the modules 27, 28, 29 thus allowing the pig 26 to negotiate tight, and for example 180°, bends within pipelines.

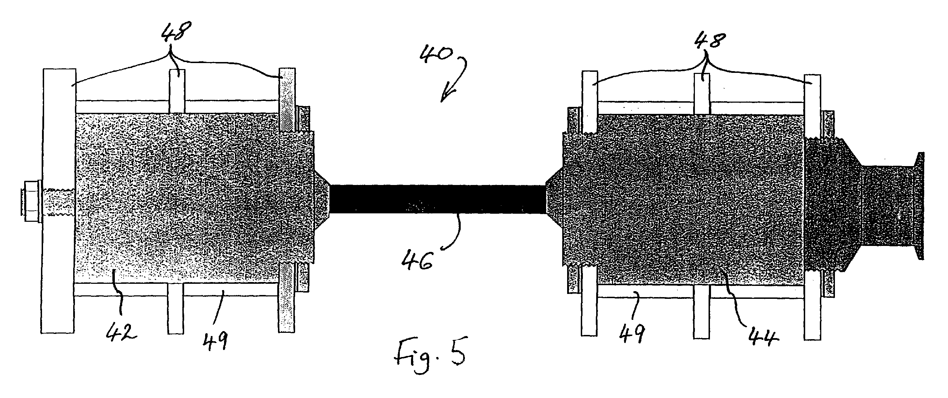

Referring to Figure 5, a pipeline pig 40 has its electronics components distributed between two sealed stainless steel modules 42,44 with an articulated connection 46 therebetween in the form of an hydraulic hose enclosing a communications cable. A plurality of polyurethane discs 48 are mounted around the outsides of the modules 42, 44 and provide impact protection therefor. The diameter of the discs 48 is selected in accordance with the bore of the system to be monitored by the pig 40 so that the pig is sealed to the inner tube wall for ease of being driven therethrough by water pressure.

Advantageously, the discs 48 are retained in grooves in the outer surface of the casing 42, 44 to facilitate their replacement by discs of different size for use of the pig 40 in tube systems of different bores. Further impact protection is provided by tubular polyurethane sleeves 49 approximately 5 mm thick, which are slid over the casings 42, 44.

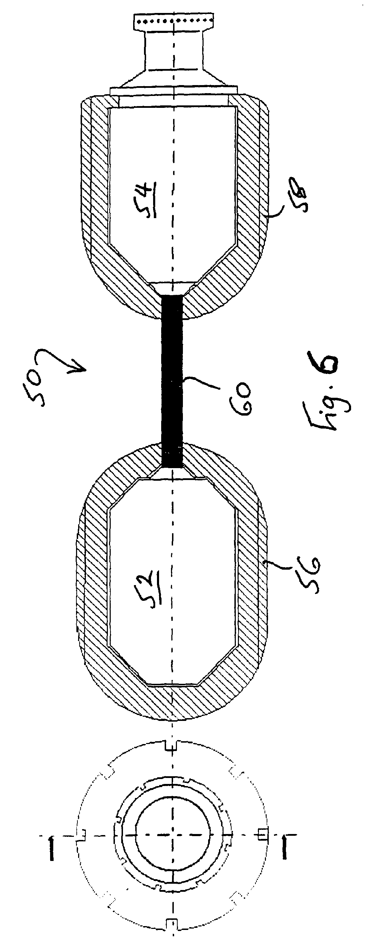

Referring to Figure 6, a pipeline pig 50 comprises two stainless steel modules 52, 54 which contain the required electronics components sealed therewithin against water ingress. Each module 52, 54 is enclosed within a respective polyurethane protective housing 56, 58 and they are connected together in an articulated manner by a flexible cable 60.

The articulation of the pipeline pigs described above allows them to follow tortuous paths through a tube system, usually without becoming stuck. However, should a pig become stuck, then it may well be possible to achieve its release by reversing the flow of driving water.

Although it will be appreciated that the ultimate size, in particular the smallness, of the pipeline pig in accordance with the present invention will depend on the specific electronics components that are selected for inclusion therein, it is envisaged that each of the modules 4 and 6, for example, may have a maximum outer diameter of 65 mm, and that the pig 2 may have a maximum overall diameter down to 85 mm. The overall length of a three module arrangement may be between 550 mm and 700 mm, depending on the geometry of the tube system being studied.

The computer software programme that supports the operation of the pipeline pig of the present invention is arranged to produce an easily understood display in minimum time. The pipeline wall thickness measured at eight points around 360° at each longitudinal location, together with the designed wall thickness, and the distance from the start of the survey, are all displayed, along with images of the inside of the pipeline. The software selects for display that information which is anomalous, that is to say relating to positions of the pipeline wall that are thinner or thicker than operating requirements, thus obviating the need for tedious and time-consuming viewing, 'frame-by-frame', of each cross-sectional image. In this way, the attention of the operator is drawn to specific areas of the inner wall of the pipeline that may give evidence of contamination, thinning, metal loss, or corrosion.

It is to be understood that features of pipeline pigs of the various embodiments herein described may be combined as appropriate to produce a pig for a particular application.

## Claims

1. A pipeline pig for monitoring a pipeline from the interior thereof, the pig comprising an electronics module arrangement that comprises a transmitter for transmitting monitoring signals to the wall of the pipeline, a receiver arrangement for receiving transmitted signals returned from the wall of the pipeline, a microprocessor for analysing the received signals, a data logger for storing the data analysed by the microprocessor, and a source of electrical power for supplying the transmitter, receiver arrangement, microprocessor and data logger.

2. A pipeline pig according to claim 1, wherein the receiver arrangement comprises an analogue receiver for receiving the returned signals and an associated digital receiver arranged to convert the analogue signals into digital form and to send the digital signals to the microprocessor.

3. A pipeline pig according to claim 1 or claim 2, wherein the power source comprises a battery, and the electronics module arrangement comprises a charging circuit for the battery.

4. A pipeline pig according to any one of the preceding claims, wherein the pipeline pig has an outer casing that is flexible, and is preferably made of plastics material.

5. A pipeline pig according to claim 4 wherein the electronics module arrangement comprises at least two modules that are interconnected by electric cabling, the modules and the cabling being enclosed within the outer casing, or within respective outer casings.

6. A pipeline pig according to any one of the preceding claims, wherein the signals transmitted by the transmitter are acoustic, preferably ultrasonic, signals.

7. A pipeline pig according to any one of the preceding claims, wherein the electronics module arrangement is arranged to provide an estimate of the thickness of the pipeline wall.

8. A pipeline pig according to any one of the preceding claims, wherein the electronics module arrangement comprises three modules that are interconnected by cabling, each module being mechanically protected by an outer polymeric component.

9. A method of monitoring a pipeline, wherein a pipeline pig comprising an electronics module arrangement, is driven along the interior of the pipeline by fluid pressure, wherein the pig transmits monitoring signals to the wall of the pipeline, receives signals returned from the wall, analyses the returned signals and stores therewithin data relating to the condition of the wall of the pipeline, the electronics module arrangement being supplied with electrical power from a source within the pig.

10. A method according to claim 9, wherein the pipeline pig is in accordance with any one of claims 1 to 8.
